# FASCICULE DE BREVET EUROPEEN

(11) **EP 0 780 268 B1**
(45) Date de publication et mention de la délivrance du brevet: **01.08.2001**
(21) Numéro de dépôt: 96402720.5
(22) Date de dépôt: 12.12.1996
(51) Int. Cl.: B60R 13/02, F16B 5/12

(54) **Système de fixation pour garniture d'automobile**
Befestigungssystem für eine Kraftfahrzeuginnenverkleidung
Fixing system for a car liner

(30) Priorité: 19.12.1995 FR 9515081
(43) Date de publication de la demande: 25.06.1997
(73) Titulaire: AUTOMOBILES PEUGEOT, 75116 Paris (FR); AUTOMOBILES CITROEN, 92200 Neuilly-sur-Seine (FR); EUROSTYLE (S.A.), F-91370 Verrières le Buisson (FR)
(72) Inventeur: Colle, Emanuel, 91140 Villebon sur Yvette (FR); Durand, Jean-Michel, 36120 Etrechet (FR)
(74) Mandataire: Thinat, Michel

(56) Documents cités:
- GB-A- 2 063 412
- US-A- 5 188 408

## Description

La présente invention concerne un système de fixation sur un support d'un ensemble comprenant deux pièces, en particulier de garniture de véhicule automobile, telle que la garniture de pied milieu de celui-ci.

On connaît un tel système selon lequel les deux pièces de la garniture de pied milieu du véhicule, en un matériau thermoplastique ou recouvertes d'un tel matériau, sont assemblées entre elles à une de leurs extrémités en ne laissant apparaître extérieurement qu'une ligne de jonction et sont fixées à un support respectivement à leurs deux extrémités opposées à la ligne de jonction par des éléments de fixation tels que des vis.

Cependant, ce système connu a pour inconvénient d'utiliser des éléments rapportés, tels que des vis, des agrafes, des pions, pour effectuer la tenue et la liaison des deux pièces ainsi que pour fixer celles-ci à une face du pied milieu formant support en tôle.

La présente invention a pour but d'éliminer l'inconvénient ci-dessus en proposant un système de fixation ne nécessitant pas d'éléments rapportés, ni d'outillage de fixation pour assembler entre elles les deux pièces et les fixer à leur support correspondant, et simplifiant l'assemblage des deux pièces.

US-A-5 188 408 concerne un système permettant de fixer l'une au-dessous de l'autre sur toute leur longueur deux pièces allongées d'une moulure de porte constituées respectivement par une plaque fixée au panneau de porte et une bande d'absorption d'impact fixée sur cette plaque. Cependant, ce document antérieur ne concerne pas le problème de réaliser un système de fixation bout à bout de deux pièces.

Selon l'invention, le système de fixation sur un support d'un ensemble comprenant deux pièces assemblées entre elles à une de leurs extrémités en ne laissant apparaître extérieurement qu'une ligne de jonction et fixées au support respectivement à leurs deux extrémités opposées à la ligne de jonction par des moyens de fixation, tels que des vis, est caractérisé en ce qu'il comprend des moyens d'agrafage de la première pièce sur le support et des moyens d'agrafage de la deuxième pièce sur la première pièce.

De préférence, les moyens d'agrafage de la première pièce sur le support comprennent deux pattes internes solidaires de la première pièce et agencées pour s'encastrer respectivement dans deux fentes du support.

Chaque patte interne précitée comprend au moins une nervure retenant amoviblement la patte dans la fente correspondante du support.

Avantageusement, les deux pattes internes précitées sont chacune approximativement en forme de V allongé s'étendant sensiblement parallèlement à l'axe longitudinal de la première pièce avec l'ouverture du V de chaque patte interne dirigée vers la paroi externe de la première pièce, les deux pattes internes étant raccordées à la partie d'extrémité de la première pièce opposée à celle fixée au support par l'intermédiaire respectivement de deux parties légèrement flexibles de raccordement maintenant les bords des ouvertures des V des deux pattes internes sensiblement dans un même plan interne parallèle à la paroi externe de la première pièce.

Chaque nervure de retenue de la patte interne correspondante est solidaire d'un flanc du V de la patte en s'étendant pratiquement sur toute la longueur de celui-ci.

De préférence, les moyens d'agrafage de la seconde pièce sur la première pièce comprennent deux pattes internes rigides solidaires de la partie d'extrémité de la seconde pièce en s'étendant sensiblement perpendiculairement à la paroi externe de celle-ci et pouvant s'engager à force respectivement dans les deux ouvertures des V des deux pattes internes de la première pièce.

Chaque patte rigide de la seconde pièce comprend, solidaire de chaque côté de celle-ci, au moins une nervure latérale perpendiculaire au plan de la patte et définissant un triangle dont le sommet se trouve au voisinage de l'extrémité libre de la patte et la base est solidaire de la paroi externe de la seconde pièce.

Le système de l'invention comprend en outre, en tant que caractéristiques additionnelles, des moyens de blocage mutuel des deux pièces.

De préférence, ces moyens de blocage mutuel comprennent une patte solidaire de la seconde pièce au voisinage de la partie d'extrémité de celle-ci et venant s'appliquer sur la face interne de la paroi externe de la première pièce lors de l'assemblage de ces deux pièces de façon à bloquer la seconde pièce relativement à la première pièce lorsque la seconde pièce est fixée au support; et deux parties de décrochement parallèles prolongeant l'extrémité de la première pièce, que viennent chevaucher respectivement deux parties évidées ou en creux de forme conjuguée de l'extrémité de la seconde pièce en position assemblée de celle-ci de façon à bloquer la première pièce relativement à la deuxième pièce.

Le décrochement des deux parties précitées de la première pièce est tel qu'il assure la continuité des deux parois externes respectivement des deux pièces assemblées entre elles.

Le système de l'invention comprend également, en tant que caractéristiques additionnelles, des moyens d'indexage permettant un positionnement relatif correct des deux pièces.

A cet effet, les moyens d'indexage comprennent des crochets de l'une des deux pièces coopérant avec un bourrelet ou rebord de l'autre pièce.

Avantageusement, les crochets précités sont réalisés sur la patte de blocage de la seconde pièce et le bourrelet est réalisé sur la face interne de la paroi externe de la première pièce transversalement à cette dernière.

Dans l'application des deux pièces à une garniture de véhicule automobile, notamment de pied milieu de celui-ci, la paroi externe de la seconde pièce comprend une dépression permettant le passage d'une ceinture de sécurité entre la seconde pièce et la première pièce et délimitée par deux rebords définissant respectivement les deux parties en creux précitées chevauchant les deux parties de décrochement.

Avantageusement, la patte de blocage de la seconde pièce est en prolongement de la dépression précitée.

Les deux pièces sont en un matériau thermoplastique ou recouvertes d'un tel matériau.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention et dans lesquels :
La figure 1 est une vue en perspective représentant les deux parties d'extrémité respectivement de deux pièces de garniture de pied milieu de véhicule automobile en position avant assemblage ;
La figure 2 est une vue en perspective représentant les deux pièces de la figure 1 en position assemblée ;
La figure 3 est une vue en coupe suivant la ligne III-III de la figure 2 ;
La figure 4 est une vue en section suivant la ligne IV-IV de la figure 1 et représentant la fixation de l'une des deux pièces de garniture à un support correspondant ;
La figure 5 est une vue en coupe suivant la ligne V-V de la figure 2 et représentant les deux pièces assemblées fixées au support correspondant ;
La figure 6 est une vue en perspective de dessous des deux pièces assemblées de la figure 2.
La figure 7 représente en coupe un autre mode de réalisation de moyens de blocage mutuel des deux pièces.

En se reportant aux figures, les références 1 et 2 désignent respectivement deux pièces allongées, représentées partiellement, d'une garniture de pied milieu de véhicule automobile en un matériau thermoplastique ou autre matériau sur lequel sera rapporté de façon appropriée un revêtement thermoplastique.

La pièce 1 constitue la partie inférieure de la garniture de pied milieu tandis que la pièce 2 constitue la partie supérieure de celle-ci.

Les pièces 1 et 2 peuvent être assemblées entre elles en ne laissant apparaître extérieurement qu'une ligne de jonction 3 et sont fixées à un support en tôle 4, constituant une face du pied milieu (non représenté), respectivement à leurs deux extrémités (non représentées) opposées à la ligne de jonction 3 par des moyens de fixation, tels que des vis.

Le système de fixation de l'invention permettant d'assembler entre elles les deux pièces 1, 2 et de fixer ces deux pièces assemblées au support 4 comprend des moyens d'agrafage 5 de la pièce inférieure 1 (première pièce) sur le support 4 et des moyens d'agrafage 6 de la pièce supérieure 2 (deuxième pièce) sur la pièce inférieure 1.

De préférence, les moyens d'agrafage 5 de la pièce inférieure 1 sur le support 4 comprennent deux pattes internes 7 solidaires de la pièce inférieure 1 et agencées pour s'encastrer respectivement dans deux fentes 8 du support 4 de façon amovible.

A cet effet, les deux pattes internes 7 sont chacune approximativement en forme de V allongé s'étendant sensiblement parallèlement à l'axe longitudinal de la pièce inférieure 1, qui comprend une paroi externe la pourvue de rebords latéraux 1b sensiblement perpendiculaires à la paroi la. Les deux pattes internes d'agrafage 7 sont raccordées à l'extrémité de la pièce inférieure 1 opposée à celle fixée au support 4 par l'intermédiaire respectivement de deux parties de raccordement 9 légèrement flexibles dont chacune est raccordée à une partie en forme de gouttière inversée 10 prolongeant la partie d'extrémité correspondante de la pièce inférieure 1 en définissant par rapport à celle-ci un décrochement 11. Les parties de raccordement 9, 10 maintiennent les bords des ouvertures des V des deux pattes d'agrafage 7 sensiblement dans un même plan interne espacé de la paroi la et sensiblement parallèle à cette dernière avec l'ouverture du V de chaque patte 7 dirigée vers la paroi la.

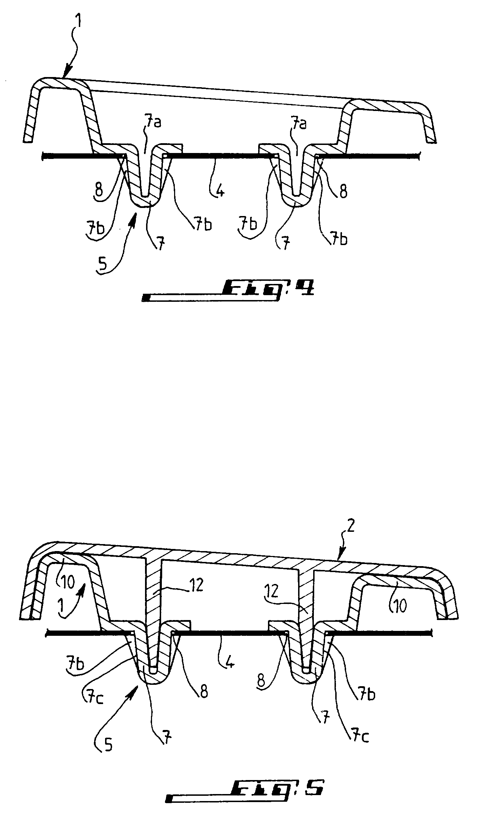

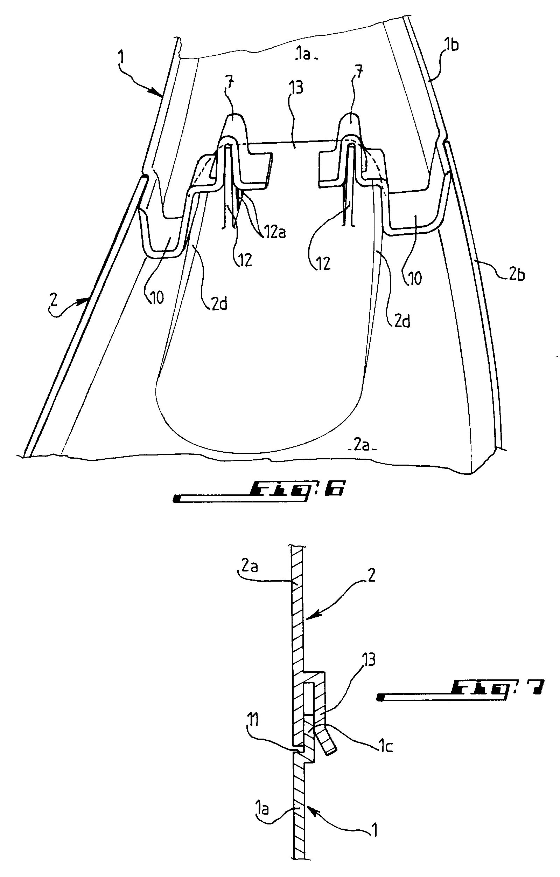

Comme cela est clairement représenté aux figures 4 et 5, chaque patte d'agrafage 7 comprend deux nervures 7b destinées à retenir amoviblement la patte 7 dans la fente correspondante 8 du support 4. Chaque nervure de retenue 7b est solidaire d'un flanc 7c du V de la patte 7 en s'étendant pratiquement sur toute la longueur de celui-ci. Chaque nervure 7b présente en section transversale la forme d'un triangle dont le sommet est raccordé à l'extrémité libre de la patte d'agrafage 7 et la base constitue un épaulement de retenue de la patte 7 venant en appui derrière le support 4. Bien entendu, il est possible de ne prévoir qu'une seule nervure 7b à chaque patte d'agrafage 7.

Les moyens d'agrafage 6 de la pièce supérieure 2 sur la pièce inférieure 1 comprennent deux pattes internes rigides 12 solidaires de la partie d'extrémité de la pièce supérieure 2 en s'étendant sensiblement perpendiculairement à la paroi externe 2a de celle-ci et en étant disposées sensiblement parallèlement à l'axe longitudinal de la pièce 2, laquelle comporte deux rebords latéraux 2b sensiblement perpendiculaires à la paroi 2a.

Les deux pattes d'agrafage 12 peuvent s'engager à force respectivement dans les deux ouvertures 7a des V des deux pattes d'agrafage 7 de la pièce inférieure 1 lors de l'assemblage de ces deux pièces.

Chaque patte d'agrafage 12 comprend, solidaires de chaque côté de celle-ci, deux nervures latérales 12a perpendiculaires au plan de la patte 12 et définissant un triangle dont le sommet se trouve au voisinage de l'extrémité libre de la patte 12 et la base est solidaire de la face interne de la paroi externe 2a de la pièce 2. Les nervures 12a permettent d'améliorer le maintien à force des pattes 12 dans les ouvertures correspondantes des V des pattes d'agrafage 7.

Le système de fixation conforme à l'invention comprend en outre, en tant que caractéristiques additionnelles, des moyens de blocage mutuel des deux pièces 1 et 2.

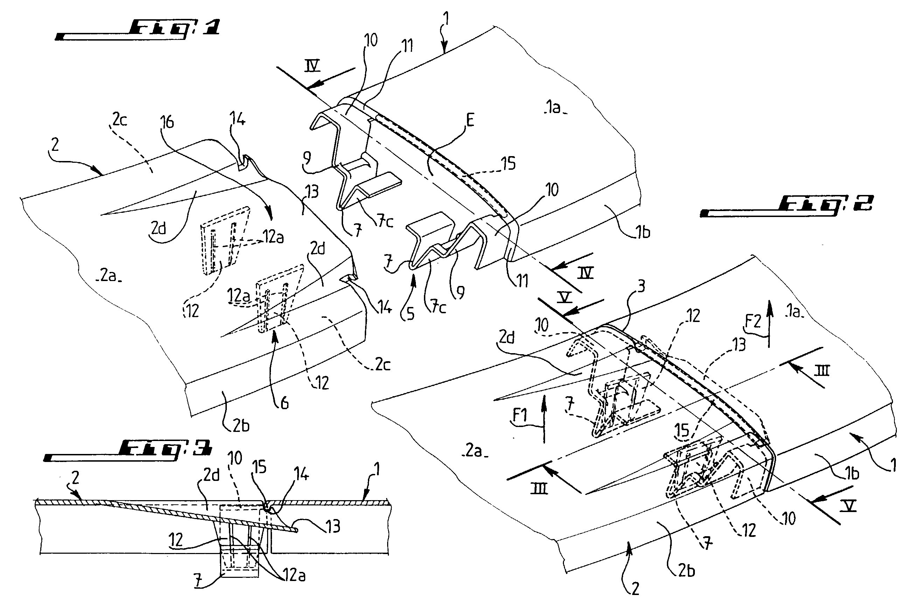

Ces moyens de blocage mutuel comprennent une patte 13 solidaire de l'extrémité de la pièce supérieure 2 en prolongeant celle-ci et pouvant venir en application sur la face interne de la paroi la de la pièce 1 lors de l'assemblage de ces deux pièces 1, 2 de façon à empêcher un déplacement de la pièce supérieure 2 relativement à la pièce inférieure 1 suivant le sens indiqué par la flèche F1 en figure 2 lorsque bien entendu les pièces 1, 2 sont fixées au support 4 à leurs extrémités respectives opposées à la ligne de jonction 3. Les moyens de blocage mutuel comprennent également les deux parties en forme de gouttière inversée 10 de la pièce 1 que viennent chevaucher respectivement deux parties évidées ou en creux de forme conjuguée 2c définies chacune entre un rebord 2b et la patte de blocage 13 de façon qu'en position assemblée des pièces 1, 2, la pièce inférieure 1 ne puisse se déplacer relativement à la pièce supérieure 2 dans le sens indiqué par la flèche F2 en figure 2.

On notera que le décrochement 11 de la pièce inférieure 1 est tel qu'il assure la continuité des deux parois externes la, 2a respectivement des deux pièces assemblées entre elles 1, 2 comme cela ressort de la figure 2.

Le système de fixation comprend également des moyens d'indexage permettant un positionnement relatif correct des deux pièces 1, 2, c'est-à-dire assurant un bon contact et un jeu pratiquement nul, et en tout cas constant, entre ces deux pièces.

Ces moyens d'indexage comprennent deux crochets 14 de préférence réalisés sur la patte de blocage 13 de la pièce 2 de chaque côté de celle-ci et un bourrelet ou rebord 15 de préférence réalisé sur la face interne de la paroi la de la pièce extérieure 1 transversalement à cette dernière. Ainsi, en position assemblée des deux pièces 1, 2, les deux crochets 14 de la patte 13 s'engagent sur le bourrelet 15.

Comme cela ressort clairement des figures 1 et 2, la paroi 2a de la pièce 2 comprend une partie en creux ou dépression 16 délimitée par deux rebords 2d qui définissent eux-mêmes respectivement les deux parties en creux 2c chevauchant les deux parties en forme de gouttière inversée 10 de la pièce 1. Cette dépression 16 permet le passage d'une ceinture de sécurité entre la pièce supérieure 2 et la pièce inférieure 1. La patte de blocage 13 est située en prolongement du fond de la dépression 16.

La figure 7 représente une variante de réalisation de la patte de blocage 13 qui, dans le cas présent, définit par rapport à la face interne de la paroi 2a de la pièce supérieure 2 une ouverture transversale dans laquelle peut s'engager la partie d'extrémité correspondante lc de la pièce 1. Cette figure montre que la partie d'extrémité lc définit le décrochement 11 par rapport à la paroi la de façon à assurer la continuité entre les parois la et 2a des pièces 1, 2.

Le mode de fixation des pièces 1 et 2 entre elles et au support 4 ressort déjà de la description qui précède et va être maintenant brièvement expliqué.

Tout d'abord, la pièce inférieure 1 est fixée au support 4 en introduisant les deux pattes 7 dans leurs fentes respectives 8 du support 4 jusqu'à ce que les nervures 7b se trouvent derrière le support 4 de façon à retenir les pattes 7, donc la pièce 1, sur le support 4.

Ensuite, la pièce supérieure 2 est assemblée à la pièce inférieure 1 en introduisant la patte de blocage 13 dans l'espace E défini entre l'extrémité de la paroi la et les pattes d'agrafage 7 de façon que d'une part les pattes d'agrafage 12 de la pièce 2 s'engagent à force dans les ouvertures 7a des V des pattes 7 et d'autre part les deux crochets 14 s'engagent sur le bourrelet 15 de la pièce 1 avec chevauchement concommitant des parties en forme de gouttière inversée 10 par les parties en creux 2c de la pièce 2.

Les pièces 1 et 2 sont alors fixées, à leurs extrémités opposées à la ligne de jonction 3, au support 4 par des moyens de fixation appropriés.

L'assemblage ainsi réalisé est tel que la pièce inférieure 1 est bloquée en position et ne peut plus être démontée sans que la pièce supérieure 2 ne le soit au préalable. La pièce supérieure 2 est également bloquée en position par la patte de blocage 13.

L'ensemble ainsi fixé ne laisse apparaître que la jonction entre les deux pièces, ainsi les moyens de liaison entre les deux pièces sont cachés.

Chaque pièce 1, 2 est de préférence réalisée par moulage.

## Revendications

1. Système de fixation sur un support (4) d'un ensemble comprenant deux pièces assemblées entre elles à une de leurs extrémités (1, 2) en ne laissant apparaître extérieurement qu'une ligne de jonction (3) et fixées au support (4) respectivement à leurs deux extrémités opposées à la ligne de jonction (3) par des moyens de fixation, tels que des vis, caractérisé en ce qu'il comprend des moyens d'agrafage de la première pièce (1) sur le support (4) et des moyens d'agrafage de la deuxième pièce (2) sur la première pièce (1).

2. Système selon la revendication 1, caractérisé en ce que les moyens d'agrafage de la première pièce (1) sur le support (4) comprennent deux pattes internes (7) solidaires de la première pièce (1) et agencées pour s'encastrer respectivement dans deux fentes (8) du support (4).

3. Système selon la revendication 2, caractérisé en ce que chaque patte interne (7) précitée comprend au moins une nervure (7b) retenant amoviblement la patte (7) dans la fente correspondante (8) du support (4).

4. Système selon la revendication 2 ou 3, caractérisé en ce que les deux pattes internes (7) précitées sont chacune approximativement en forme de V allongé s'étendant sensiblement parallèlement à l'axe longitudinal de la première pièce (1) avec l'ouverture (7a) du V de chaque patte interne (7) dirigée vers la paroi externe (la) de la première pièce (1) et en ce que les deux pattes internes (7) sont raccordées à la partie d'extrémité de la première pièce opposée à celle fixée au support (4) par l'intermédiaire respectivement de deux parties légèrement flexibles de raccordement (9) maintenant les bords des ouvertures des V des deux pattes internes (7) sensiblement dans un même plan interne parallèle à la paroi externe (1a) de la première pièce (1).

5. Système selon la revendication 4, caractérisé en ce que chaque nervure de retenue (7b) de la patte interne correspondante (7) est solidaire d'un flanc (7c) du V de la patte (7) en s'étendant pratiquement sur toute la longueur de celui-ci.

6. Système selon l'une des revendications précédentes, caractérisé en ce que les moyens d'agrafage de la seconde pièce (2) sur la première pièce (1) comprennent deux pattes internes rigides (12) solidaires de la partie d'extrémité de la seconde pièce (2) en s'étendant sensiblement perpendiculairement à la paroi externe (2a) de celle-ci et pouvant s'engager à force respectivement dans les deux ouvertures (7a) des V des deux pattes internes (7) de la première pièce (1).

7. Système selon la revendication 6, caractérisé en ce que chaque patte rigide (12) de la seconde pièce (2) comprend, solidaire de chaque côté de celle-ci, au moins une nervure latérale (12a) perpendiculaire au plan de la patte (12) et définissant un triangle dont le sommet se trouve au voisinage de l'extrémité de la patte (12) et la base est solidaire de la paroi externe (2a) de la seconde pièce (2).

8. Système selon l'une des revendications précédentes, caractérisé en ce qu'il comprend en outre des moyens de blocage mutuel des deux pièces (1, 2).

9. Système selon la revendication 8, caractérisé en ce que les moyens de blocage mutuel comprennent une patte (13) solidaire de la seconde pièce (2) au voisinage de la partie d'extrémité de celle-ci et venant s'appliquer sur la partie interne de la paroi externe (1a) de la première pièce (1) lors de l'assemblage de ces deux pièces de façon à bloquer la seconde pièce (2) relativement à la première pièce (1) lorsque la seconde pièce (2) est fixée au support (4); et deux parties de décrochement parallèles (10) prolongeant l'extrémité de la première pièce (1), que viennent chevaucher respectivement deux parties évidées ou en creux (2c) de forme conjuguée de l'extrémité de la seconde pièce (2) en position assemblée de celles-ci de façon à bloquer la première pièce (1) relativement à la seconde pièce (2).

10. Système selon la revendication 9, caractérisé en ce que le décrochement (11) des deux parties précitées (10) de la première pièce (1) est tel qu'il assure la continuité des deux parois externes (1a, 2a) respectivement des deux pièces assemblées entre elles (1, 2).

11. Système selon l'une des revendications précédentes, caractérisé en ce qu'il comprend des moyens d'indexage permettant un positionnement relatif correct des deux pièces (1, 2).

12. Système selon la revendication 11, caractérisé en ce que les moyens d'indexage comprennent des crochets (14) de l'une (2) des deux pièces (1, 2) coopérant avec un bourrelet ou rebord (15) de l'autre pièce (1).

13. Système selon la revendication 12, caractérisé en ce que les crochets (14) précités sont réalisés sur la patte de blocage (13) de la seconde pièce (2) et le bourrelet (15) est réalisé sur la face interne de la paroi externe (1a) de la première pièce (1) transversalement à cette dernière.

14. Système selon l'une des revendications précédentes, caractérisé en ce que les deux pièces (1, 2) forment une garniture de véhicule automobile, notamment de pied milieu.

15. Système selon la revendication 14, caractérisé en ce que la paroi externe (2a) de la seconde pièce (2) comprend une dépression (16) permettant le passage d'une ceinture de sécurité entre la seconde pièce (2) et la première pièce (1) et délimitée par deux rebords (2d) définissant respectivement les deux parties en creux (2c) précitées chevauchant les deux parties de décrochement (10).

16. Système selon la revendication 15, caractérisé en ce que la patte de blocage (13) de la seconde pièce (2) est en prolongement de la dépression (16) précitée.

17. Système selon l'une des revendications précédentes, caractérisé en ce que les deux pièces (1, 2) sont en un matériau thermoplastique ou recouvertes d'un tel matériau.

## Patentansprüche

1. Befestigungssystem auf einer Unterlage (4) eines Aufbaus, umfassend zwei miteinander an einem ihrer äußeren Enden derart zusammengebaute Stücke (1, 2), daß außen nur eine Verbindungslinie (3) sichtbar ist, und die jeweils an ihren zwei der Verbindungslinie (3) gegenüberliegenden äußeren Enden durch Befestigungsmittel, wie zum Beispiel Schrauben, an der Unterlage (4) befestigt sind, dadurch gekennzeichnet, daß es Klammermittel des ersten Stücks (1) auf der Unterlage (4) und Klammermittel des zweiten Stücks (2) auf dem ersten Stück (1) umfaßt.

2. System gemäß Anspruch 1, dadurch gekennzeichnet, daß die Klammermittel des ersten Stücks (1) auf der Unterlage (4) zwei interne Befestigungsklauen (7) umfassen, die mit dem ersten Stück (1) fest verbunden und angeordnet sind, um sich jeweils in zwei Schlitze (8) der Unterlage (4) einzufügen.

3. System gemäß Anspruch 2, dadurch gekennzeichnet, daß jede vorgenannte interne Klaue (7) wenigstens eine Rippe (7b) umfaßt, die die Klaue (7) in dem entsprechenden Schlitz (8) der Unterlage (4) herausnehmbar festhält.

4. System gemäß Anspruch 2 oder 3, dadurch gekennzeichnet, daß die zwei vorgenannten internen Klauen (7) jede ungefähr eine verlängerte V-Form aufweisen, die sich deutlich parallel zur Längsachse des ersten Stücks (1) erstreckt, wobei die Öffnung (7a) des Vs jeder internen Klaue (7) zur Außenwand (1a) des ersten Stücks (1) gerichtet ist, und daß die zwei internen Klauen (7) am Teil des äußeren Endes des dem an der Unterlage (4) befestigten gegenüberliegenden ersten Stücks jeweils mittels zwei leicht flexiblen Verbindungsteilen (9) verbunden sind, die die Ränder der Öffnungen der Vs der zwei internen Klauen (7) deutlich in einer selben parallelen internen Ebene zur Außenwand (1a) des ersten Stücks (1) halten.

5. System gemäß Anspruch 4, dadurch gekennzeichnet, daß jede Rückhalterippe (7b) der entsprechenden internen Klaue (7) fest mit einer Flanke (7c) des Vs der Klaue (7) verbunden ist und sich dabei praktisch über die ganze Länge derselben erstreckt.

6. System gemäß einer der vorgenannten Ansprüche, dadurch gekennzeichnet, daß die Klammermittel des zweiten Stücks (2) auf dem ersten Stück (1) zwei steife interne Klauen (12) umfassen, die mit dem Teil des äußeren Endes des zweiten Stücks (2) fest verbunden sind und sich deutlich rechtwinklig zur Außenwand (2a) derselben erstrecken und sich unter Krafteinwirkung jeweils in die zwei Öffnungen (7a) der Vs der zwei internen Klauen (7) des ersten Stücks (1) einfügen können.

7. System gemäß Anspruch 6, dadurch gekennzeichnet, daß jede steife Klaue (12) des zweiten Stücks (2), fest mit jeder Seite derselben verbunden, wenigstens eine laterale Rippe (12a) senkrecht zur Ebene der Klaue (12) umfaßt und ein Dreieck definiert, dessen Spitze sich in der Nähe des äußeren Endes der Klaue (12) befindet, und die Basis ist mit der Außenwand (2a) des zweiten Stücks (2) fest verbunden.

8. System gemäß einer vorgenannten Ansprüche, dadurch gekennzeichnet, daß es außerdem gegenseitige Blockiermittel der zwei Stücke (1, 2) umfaßt.

9. System gemäß Anspruch 8, dadurch gekennzeichnet, daß die gegenseitigen Blockiermittel eine Klaue (13) umfassen, die mit dem zweiten Stück (2) in der Nähe des Teils des äußeren Endes desselben fest verbunden ist und auf dem Innenteil der Außenwand (1a) des ersten Stücks (1) beim Zusammenbau dieser zwei Stücke derart aufliegt, daß das zweite Stück (2) relativ zum ersten Stück (1) blockiert wird, wenn das zweite Stück (2) an der Unterlage (4) befestigt wird; und zwei parallele Abnahmeteile (10), die das äußere Ende des ersten Stücks (1) verlängern, über das jeweils zwei ausgesparte oder hohle Teile (2c) in dem äußeren Ende des zweiten Stücks (2) angepaßter Form in zusammengebauter Form desselben derart übergreifen, daß das erste Stück (1) relativ zum zweiten Stück (2) blockiert wird.

10. System gemäß Anspruch 9, dadurch gekennzeichnet, daß das Abnahmeteil (11) der zwei vorgenannten Teile (10) des ersten Stücks (1) derart ist, daß es die Kontinuität der zwei Außenwände (1a, 2a) jeweils der zwei miteinander zusammengebauten zwei Stücke untereinander (1, 2) gewährleistet.

11. System gemäß einem der vorgenannten Ansprüche, dadurch gekennzeichnet, daß es Indexiermittel umfaßt, die eine korrekte relative Positionierung der zwei Stücke (1,2 ) erlaubt.

12. System gemäß Anspruch 11, dadurch gekennzeichnet, daß die Indexiermittel Haken (14) eines (2) der zwei Stücke (1, 2) umfassen, die mit einer Verdickung oder Randleiste (15) des anderen Stücks (1) zusammenwirken.

13. System gemäß Anspruch 12, dadurch gekennzeichnet, daß die vorgenannten Haken (14) auf der Blockierklaue (13) des zweiten Stücks (2) realisiert sind und die Verdickung (15) auf der Innenseite der Außenwand (1a) des ersten Stücks (1) querverlaufend zu diesem realisiert ist.

14. System gemäß einem der vorgenannten Ansprüche, dadurch gekennzeichnet, daß die zwei Stücke (1, 2) eine Kraftfahrzeuginnenverkleidung bilden, insbesondere des Mittelfußes.

15. System gemäß Anspruch 14, dadurch gekennzeichnet, daß die Außenwand (2a) des zweiten Stücks (2) eine Vertiefung (16) umfaßt, die den Durchgang eines Sicherheitsgurtes zwischen dem zweiten Stück (2) und dem ersten Stück (1) erlaubt und durch zwei Randleisten (2d) begrenzt wird, die jeweils die vorgenannten zwei hohlen Teile (2c) definieren, die über die zwei Abnahmeteile (10) übergreifen.

16. System gemäß Anspruch 15, dadurch gekennzeichnet, daß die Blockierklaue (13) des zweiten Stücks (2) in Verlängerung der vorgenannten Vertiefung (16) ist.

17. System gemäß einer der vorgenannten Ansprüche, dadurch gekennzeichnet, daß die zwei Stücke (1, 2) aus einem thermoplastischen Material oder mit einem derartigen Material überzogen sind.

## Claims

1. System for fixing on a support (4) an assembly comprising two pieces (1, 2) assembled together at one of their ends by letting appear outerly only one junction line (3) and fixed to the support (4) respectively at their two ends opposed to the junction line (3), respectively, by fixation means, such as screws, characterized in that it comprises means for clamping the first piece (1) onto the support (4) and means for clamping the second piece (2) onto the first piece (1).

2. System according to claim 1, characterized in that the means for clamping the first piece (1) onto the support (4) comprise two inner lugs (7) integral with the first piece (1) and arranged for being encased respectively in two slots (8) of the support (4).

3. System according to claim 2, characterized in that each above-mentioned inner lug (7) comprises at least one rib (7b) for removably retaining the lug (7) in the corresponding slot (8) of the support (4).

4. System according to claim 2 or 3, characterized in that each of the two above-mentioned inner lugs (7) has an approximately lengthened V shape extending substantially parallel to the longitudinal axis of the first piece (1) with the opening (7a) of the V of each inner lug (7) being directed towards the outer wall (1a) of the first piece (1) and in that the two inner lugs (7) are connected to the end part of the first piece that is opposed to that which is fixed to the support (4) by means respectively of two slightly flexible connecting parts (9) that maintain the edges of the openings of the V of the two inner lugs (7) substantially in a same inner plane parallel to the outer wall (1a) of the first piece (1).

5. System according to claim 4, characterized in that each retaining rib (7b) of the corresponding inner lug (7) is integral with one side (7c) of the V of the lug (7) by extending practically on all the length thereof.

6. System according to one of the preceding claims, characterized in that the means for clamping the second piece (2) onto the first piece (1) comprise two rigid inner lugs (12) integral with the end part of the second piece (2) by extending substantially perpendicular to the outer wall (2a) thereof and able to be forcingly engaged respectively in the two openings (7a) of the V of the two inner lugs (7) of the first piece (1).

7. System according to claim 6, characterized in that each rigid lug (12) of the second piece (2) comprises, integral with each side thereof, at least one lateral rib (12a) perpendicular to the plane of the lug (12) and defining a triangle the top thereof is near the end of the lug (12) and the base is integral with the outer wall (2a) of the second piece (2).

8. System according to one of the preceding claims, characterized in that it further comprises means for a mutual locking of the two pieces (1, 2).

9. System according to claim 8, characterized in that the mutual locking means comprise a lug (13) integral with the second piece (2) near the end part thereof and coming to be applied on the inner part of the outer wall (1a) of the first piece (1) upon assembling these two pieces in order to lock the second piece (2) relatively to the first piece (1) when the second piece (2) is fixed to the support (4) ; and two parallel flexure parts (10) extending the end of the first piece (1), which are overlapped by respectively two hollowed or recessed parts (2c) of a shape that is conjugated to the end of the second piece (2) in the assembled position thereof in order to lock the first piece (1) relatively to the second piece (2).

10. System according to claim 9, characterized in that the flexure (11) of the two above-mentioned parts (10) of the first piece (1) is such that it ensures the continuity of the two outer walls (1a, 2a) respectively of the two pieces (1, 2) as assembled together.

11. System according to one of the preceding claims, characterized in that it comprises indexing means enabling a correct relative position of the two pieces (1, 2).

12. System according to claim 11, characterized in that the indexing means is comprised of hooks (14) in one (2) of the two pieces (1, 2) co-operating with a rim or edge (15) in the other piece (1).

13. System according to claim 12, characterized in that the above mentioned hooks (14) are made on the locking lug (13) of the second piece (2), and the rim (15) is made on the inner face of the outer wall (1a) of the first piece (1) transversally thereto.

14. System according to one of the preceding claims, characterized in that the two pieces (1, 2) form a car liner, typically of middle foot.

15. System according to claim 14, characterized in that the outer wall (2a) of the second piece (2) comprises a depression (16) enabling passage of a safety belt between the second piece (2) and the first piece (1) and delimited by two edges (2d) respectively defining the two above-mentioned recessed parts (2c) overlapping the two flexure parts (10).

16. System according to claim 15, characterized in that the locking lug (13) of the second piece (2) is in the extension of the above-mentioned depression (16).

17. System according to one of the preceding claims, characterized in that the two pieces (1, 2) are made of a thermoplastic material or are covered with such a material.
